# EUROPEAN PATENT SPECIFICATION

(11) **EP 3 674 057 B1**
(45) Date of publication and mention of the grant of the patent: **09.08.2023**
(21) Application number: 19219847.1
(22) Date of filing: 27.12.2019
(51) Int. Cl.: B29C 45/84, F02B 77/13, B29C 45/00

(54) **INJECTION MOLDING MACHINE AND COVER WITH SOUNDPROOF PORTION FOR INJECTION MOLDING MACHINE**
SPRITZGIESSMASCHINE UND ABDECKUNG MIT SCHALLDICHTEM ABSCHNITT FÜR SPRITZGIESSMASCHINE
MACHINE DE MOULAGE PAR INJECTION ET COUVERCLE DOTÉ D'UNE PARTIE INSONORISÉE POUR MACHINE DE MOULAGE PAR INJECTION

(30) Priority: 28.12.2018 JP 2018248477
(43) Date of publication of application: 01.07.2020
(73) Proprietor: Sumitomo Heavy Industries, Ltd., Tokyo 141-6025 (JP)
(72) Inventor: YAMASHITA, Koki, Chiba-shi Chiba 263-0001 (JP)
(74) Representative: Louis Pöhlau Lohrentz

(56) References cited:
- CN-U- 207 825 412
- JP-A- 2000 190 160
- JP-U- H0 714 173

## Description

### BACKGROUND OF THE INVENTION

### Field of the Invention

Certain embodiments of the present invention relate to an injection molding machine and a cover with a soundproof portion for an injection molding machine.

### Description of Related Art

An injection molding machine described in Japanese Unexamined Patent Publication No. 2003-112336 includes an injection unit and an injection unit cover. The injection unit includes a cylinder which heats a molding material, a screw which is disposed in the cylinder so as to be rotatable and movable forward or rearward, a drive source which drives the screw, and a transmission mechanism which transmits a driving force of the drive source to the screw. The injection unit cover houses therein the drive source and the transmission mechanism which transmits the driving force of the drive source.

Further machines with protection casings of a component are disclosed in Patent Document 2, Patent Document 3 and Patent Document 4.

[Patent Document 1] Japanese Unexamined Patent Publication No. 2003-112336
[Patent Document 2] Chinese Patent Document CN207825412U
[Patent Document 3] Japanese Patent Document JPH0714173U
[Patent Document 4] Japanese Patent Document JP2000190160A

### SUMMARY OF THE INVENTION

The invention is set out in the appended set of claims.

The injection molding machine includes a cover such as the injection unit cover. The cover houses therein the drive source and the transmission mechanism which transmits the driving force of the drive source. The drive source and the transmission mechanism are noise generation sources which generate noises propagating to the outside of the cover.

The noise propagating to the outside of the cover includes a noise generated inside the cover. The noise generated inside the cover propagates from the inside of the cover to the outside of the cover and is heard outside the cover.

The noise generated inside the cover is, for example, an impact sound. The impact sound is a sound generated by impact. The impact is caused by, for example, backlash. Since the impact causes a vibration, a vibration sound is also generated. The vibration sound is a sound generated by the vibration. The vibration sound is also generated by causes other than the impact. For example, when the drive of the drive source is started and stopped, the vibration is generated due to an abrupt change in the driving force, and thus the vibration sound is generated.

In addition, the noise generated inside the cover is not limited to the impact sound and the vibration sound. Examples of the noise generated inside the cover include a friction sound and a wind noise. The friction sound is a sound generated by friction between machine elements. The wind noise is a sound generated by a movement of a machine element.

The noise propagating to the outside of the cover includes a vibration sound generated by the vibration of the cover. The vibration of the cover is caused by the impact generated inside the cover. Therefore, the vibration sound is heard following the impact sound from the outside of the cover. In addition, the vibration of the cover is caused not only by the impact generated inside the cover but also by the vibration generated inside the cover.

An aspect of the present invention provides a technique capable of reducing a noise propagating to the outside of a cover.

An injection molding machine according to an aspect of the present invention includes a cover which surrounds a noise generation source of the injection molding machine and a soundproof portion which reduces a noise propagating to an outside of the cover.

According to an aspect of the present invention, it is possible to reduce the noise propagating to the outside of the cover.

### BRIEF DESCRIPTION OF THE DRAWINGS

Fig. 1 is a view showing a state when a mold opening of an injection molding machine according to an embodiment is completed.
Fig. 2 is a view showing a state when a mold of the injection molding machine according to the embodiment is clamped.
Fig. 3 is a view showing a state when an injection of the injection unit according to the embodiment is started.
Fig. 4 is a view showing a state when the injection of the injection unit according to the embodiment is completed.
Fig. 5 is a top view of an injection unit cover according to the embodiment.
Fig. 6 is a cross-sectional view of a front cover and an oil pan according to the embodiment.
Fig. 7 is a cross-sectional view of a rear cover according to the embodiment.

### DETAILED DESCRIPTION OF THE INVENTION

Hereinafter, an embodiment of the present invention will be described with reference to accompanying drawings. In addition, in each drawing, the same or corresponding reference numerals are assigned to the same or corresponding configurations, and descriptions thereof are omitted.

### (Injection Molding Machine)

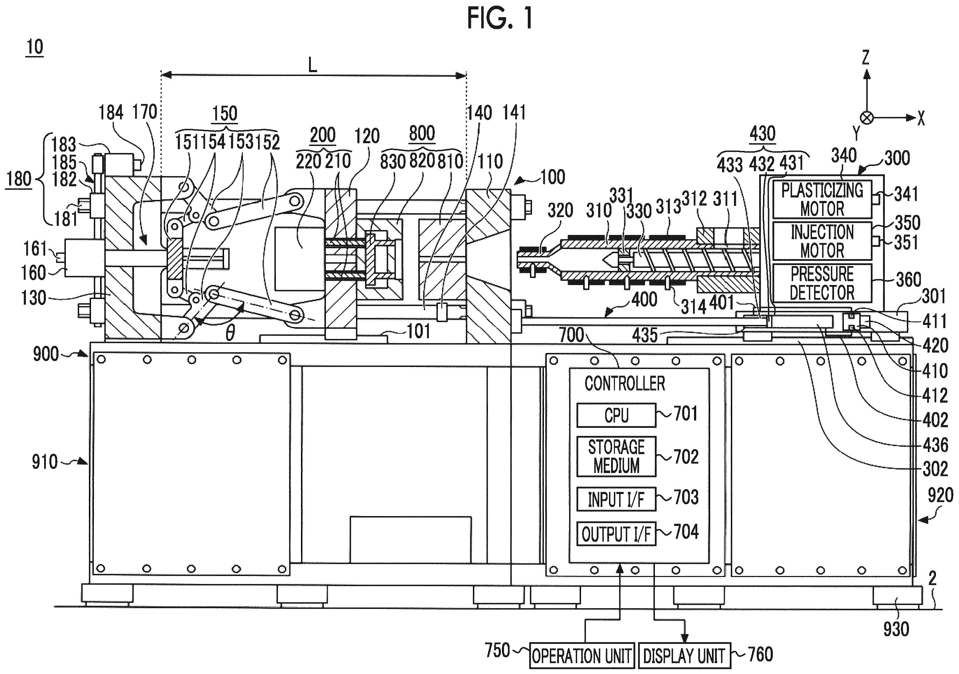

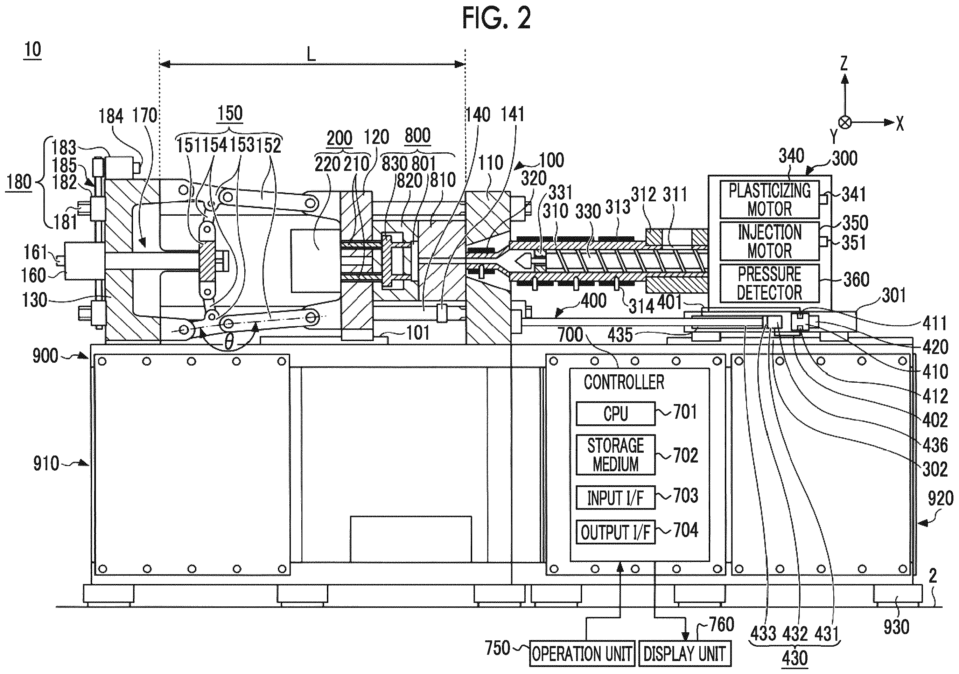

Fig. 1 is a view showing a state when a mold opening of an injection molding machine according to an embodiment is completed. Fig. 2 is a view showing a state when a mold of the injection molding machine according to the embodiment is clamped. In this specification, an X-axis direction, a Y-axis direction, and a Z-axis direction are directions perpendicular to each other. The X-axis direction and the Y-axis direction represent a horizontal direction, and the Z-axis direction represents a vertical direction. In a case where a mold clamping unit 100 is a horizontal type, the X-axis direction is a mold opening and closing direction and the Y-axis direction is a width direction of an injection molding machine 10. A negative side in the Y-axis direction is referred to as an operation side, and a positive side in the Y-axis direction is referred to as a non-operation side.

As shown in Figs. 1 and 2, the injection molding machine 10 includes a mold clamping unit 100, an ejector unit 200, an injection unit 300, a movement unit 400, a controller 700, and a frame 900. The frame 900 includes a mold clamping unit frame 910 and an injection unit frame 920. The mold clamping unit frame 910 and the injection unit frame 920 are respectively installed on a floor 2 through a leveling adjuster 930. The controller 700 is disposed in the internal space of the injection unit frame 920. Hereinafter, each component of the injection molding machine 10 will be described.

### (Mold Clamping Unit)

In descriptions of the mold clamping unit 100, a movement direction (for example, X-axis positive direction) of a movable platen 120 at the time of the mold closing is defined as a front side, and a movement direction (for example, X-axis negative direction) of the movable platen 120 at the time of the mold opening is defined as a rear side.

The mold clamping unit 100 performs mold closing, pressurizing, mold clamping, depressurizing, and mold opening of a mold unit 800. The mold unit 800 includes a stationary mold 810 and a movable mold 820.

The mold clamping unit 100 is, for example, the horizontal type, and the mold opening and closing direction is the horizontal direction. The mold clamping unit 100 includes a stationary platen 110, a movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. The stationary mold 810 is attached to a surface of the stationary platen 110 facing the movable platen 120.

The movable platen 120 is disposed so as to be movable in the mold opening and closing direction with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus the mold closing, pressurizing, mold clamping, depressurizing, and mold opening of the mold unit 800 are performed.

The toggle support 130 is disposed so as to be separated from the stationary platen 110 and is placed on the mold clamping unit frame 910 to be movable in mold opening and closing direction. In addition, the toggle support 130 may be disposed so as to be movable along a guide which is placed on the mold clamping unit frame 910. The guide of the toggle support 130 may be also used as the guide 101 of the movable platen 120.

In addition, the stationary platen 110 is fixed to the mold clamping unit frame 910, and the toggle support 130 is disposed so as to be movable in the mold opening and closing direction with respect to the mold clamping unit frame 910 in the present embodiment. However, the toggle support 130 may be fixed to the mold clamping unit frame 910, and stationary platen 110 may be disposed so as to be movable in the mold opening and closing direction with respect to the mold clamping unit frame 910.

The stationary platen 110 and the toggle support 130 are connected to each other with a gap L in the mold opening and closing direction by the tie bar 140. Aplurality of (forexample, four) tie bars 140 may be used. The plurality of tie bars 140 are disposed in parallel in the mold opening and closing direction and extend according to a mold clamping force. A tie bar strain detector 141 which detects strain of the tie bar 140maybe provided in at least one tie bar 140. The tie bar strain detector 141 sends a signal indicating a detection result to the controller 700. The detection result of the tie bar strain detector 141 is used for detection or the like of the mold clamping force.

In addition, the tie bar strain detector 141 is used as a mold clamping force detector which detects the mold clamping force in the present embodiment. However, the present invention is not limited thereto. The mold clamping force detector is not limited to a strain gauge type detector and may be a piezoelectric type detector, a capacitance type detector, a hydraulic type detector, an electromagnetic type detector, or the like. An attachment position of the mold clamping force detector is also not limited to the tie bar 140.

The toggle mechanism 150 is disposed between the movable platen 120 and the toggle support 130 and moves the movable platen 120 in the mold opening and closing direction with respect to the toggle support 130. The toggle mechanism 150 is configured of a crosshead 151, a pair of link groups, and the like. The pair of link groups includes respectively a first link 152 and a second link 153 which are bendably and stretchably connected to each other by pins or the like. The first link 152 is oscillatingly attached to the movable platen 120 by pins or the like. The second link 153 is oscillatingly attached to the toggle support 130 by pins or the like. The second link 153 is attached to the crosshead 151 through a third link 154. When the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, the number of nodes in each link group is five in Figs. 1 and 2, but may be four. One end portion of the third link 154 may be coupled to a node between the first link 152 and the second link 153.

The mold clamping motor 160 is attached to the toggle support 130 and operates the toggle mechanism 150. The mold clamping motor 160 causes the crosshead 151 to move forward or rearward with respect to the toggle support 130, and thus the first links 152 and the second links 153 are bent and stretched and the movable platen 120 moves forward or rearward with respect to the toggle support 130. The mold clamping motor 160 is directly connected to the motion conversion mechanism 170, but may be connected to the motion conversion mechanism 170 through a belt, a pulley, or the like.

The motion conversion mechanism 170 converts a rotarymotion of the mold clamping motor 160 into a linear motion of the crosshead 151. The motion conversion mechanism 170 includes a screw shaft and a screw nut which is screwed onto the screw shaft. A ball or a roller may be interposed between the screw shaft and the screw nut.

The mold clamping unit 100 performs a mold closing process, a pressurizing process, a mold clamping process, a depressurizing process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 touches the stationary mold 810. A position or movement speed of the crosshead 151 is detected using, for example, a mold clamping motor encoder 161. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. Moreover, amovableplatenposition detector which detects the position of the movable platen 120 and a movable platen movement speed detector which detects the movement speed of the movable platen 120 are not limited to the mold clamping motor encoder 161, and a general detector can be used.

In the pressurizing process, the mold clamping motor 160 is further driven to further move the crosshead 151 forward from the mold closing completion position to a mold clamping position to generate the mold clamping force.

In the mold clamping process, the mold clamping motor 160 is driven to maintain the position of the crosshead 151 at the mold clamping position. In the mold clamping process, the mold clamping force generated in the pressurizing process is maintained. In the mold clamping process, a cavity space 801 (refer to Fig. 2) is formed between the movable mold 820 and the stationary mold 810, and the injection unit 300 fills the cavity space 801 with a liquid molding material. A filled molding material is solidified, and thus a molding product can be obtained.

The number of cavity spaces 801 may be one or more. In the latter case, a plurality of molding products can be obtained simultaneously. An insert material may be disposed in a part of the cavity space 801 and the other part of the cavity space 801 may be filled with the molding material. A molding product in which the insert material and the molding material are integrated is obtained.

In the depressurization process, the mold clamping motor 160 is driven to move the crosshead 151 rearward from the mold clamping position to the mold opening start position. Accordingly, the movable platen 120 moves rearward and the mold clamping force is reduced. The mold opening start position may be the same as the mold closing completion position.

In the mold opening process, the mold clamping motor 160 is driven to move the crosshead 151 rearward from the mold opening start position to the mold opening completion position at the set movement speed. Accordingly, the movable platen 120 moves rearward and the movable mold 820 is separated from the stationary mold 810. Thereafter, the ejector unit 200 ejects the molding product from the movable mold 820.

Setting conditions in the mold closing process, the pressurizing process, and the mold clamping process are collectively set as a series of setting conditions . For example, movement speeds or positions (including mold opening/closing start position, movement speed switching position, mold closing completion position, and mold clamping position) of the crosshead 151 and the mold clamping force in the mold closing process and the pressurizing process are collectively set as a series of setting conditions. The mold opening/closing start position, the movement speed switching position, the mold closing completion position, and the mold clamping position are arranged in this order from the rear side to the front side and represent a start point and an end point of a section where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, movement speeds or positions (mold opening start position, movement speed switching position, and mold opening completion position) of the crosshead 151 in the depressurization process and the mold opening process are collectively set as a series of setting conditions . The mold opening start position, the movement speed switching position, and the mold opening completion position are arranged in this order from the front side to the rear side and represent a start point and an end point of a section where the movement speed is set. The movement speed is set for each section. The movement speed switching position may be one or more. The movement speed switching position may not be set. The mold opening start position may be the same as the mold closing completion position. Moreover, the mold opening completion position may be the same as the mold opening/closing start position.

In addition, the movement speed, the position, or the like of the movable platen 120 may be set instead of the movement speed, the position, or the like of the crosshead 151. Moreover, the mold clamping force may be set instead of the position (for example, the mold clamping position) of the crosshead or the position of the movable platen.

Meanwhile, the driving force of the mold clamping motor 160 is amplified by the toggle mechanism 150 and transmitted to the movable platen 120. An amplification magnification of the toggle mechanism 150 is also referred to as a toggle magnification. The toggle magnification is changed according to an angle θ (hereinafter also referred to as "link angle θ") between the first link 152 and the second link 153. The link angle θ is obtained from the position of the crosshead 151. When the link angle θ is 180°, the toggle magnification becomes the maximum.

In a case where a space of the mold unit 800 is changed by replacement of the mold unit 800, a temperature change of the mold unit 800, or the like, a mold space adjustment is performed such that a predetermined mold clamping force is obtained when the mold is clamped. In the mold space adjustment, the gap L between the stationary platen 110 and the toggle support 130 is adjusted, for example, such that the link angle θ of the toggle mechanism 150 at the time of a mold touch where the movable mold 820 touches the stationary mold 810 becomes a predetermined angle .

The mold clamping unit 100 has the mold space adjustment mechanism 180. The mold space adjustment mechanism 180 adjusts the gap L between the stationary platen 110 and the toggle support 130 to perform the mold space adjustment. In addition, the mold space adjustment is performed, for example, between the end of a molding cycle to the start of a next molding cycle. The mold space adjustment mechanism 180 includes, for example, a screw shaft 181 which is formed on a rear end portion of the tie bar 140, a screw nut 182 which is held by the toggle support 130 so as to be rotatable and non-movable forward or rearward, and a mold space adjustment motor 183 which rotates the screw nut 182 screwed onto the screw shaft 181.

The screw shaft 181 and the screw nut 182 are provided for each tie bar 140. A rotation driving force of the mold space adjustment motor 183 may be transmitted to a plurality of screw nuts 182 through a rotation driving force transmission portion 185. The plurality of screw nuts 182 can be synchronously rotated with each other. In addition, it is possible to individually rotate the plurality of screw nuts 182 by changing a transmission path of the rotation driving force transmission portion 185.

The rotation driving force transmission portion 185 is configured of, for example, a gear. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotation driving force transmission portion 185 may be configured of a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In addition, the mold clamping unit 100 according to the present embodiment is the horizontal type in which the mold opening and closing direction is the horizontal direction, but may be a vertical type in which the mold opening and closing direction is the vertical direction.

In addition, the mold clamping unit 100 according to the present embodiment includes the mold clamping motor 160 as a drive source, but may include a hydraulic cylinder instead of the mold clamping motor 160. Moreover, the mold clamping unit 100 may have a linear motor for mold opening and closing and may have an electromagnet for mold clamping.

### (Ejector Unit)

Similarly to the descriptions of the mold clamping unit 100, in descriptions of the ejector unit 200, the movement direction (for example, the X-axis positive direction) of the movable platen 120 at the time of the mold closing is defined as the front side, and the movement direction (for example, the X-axis negative direction) of the movable platen 120 at the time of the mold opening is defined as the rear side.

The ejector unit 200 is attached to the movable platen 120 and moves forward or rearward together with the movable platen 120. The ejector unit 200 includes an ejector rod 210 which ejects the molding product from the mold unit 800 and a drive mechanism 220 which moves the ejector rod 210 in the X-axis direction.

The ejector rod 210 is disposed in a through-hole of the movable platen 120 so as to be movable forward or rearward. A front end portion of the ejector rod 210 is in contact with a movable member 830 which is disposed inside the movable mold 820 so as to be movable forward or rearward. The front end portion of the ejector rod 210 may be connected to the movable member 830 or may not be connected to the movable member 830.

The drive mechanism 220 includes, for example, an ejector motor and a motion conversion mechanism which converts a rotary motion of the ejector motor into a linear motion of the ejector rod 210. The motion conversion mechanism includes a screw shaft and a screw nut which is screwed onto the screw shaft. A ball or a roller may be interposed between the screw shaft and the screw nut.

The ejector unit 200 performs an ejection process under the control of the controller 700. In the ejection process, the ejector rod 210 moves forward from a stand by position to an ejection position at a set movement speed, and thus the movable member 830 moves forward and the molding product is ejected. Thereafter, the ejector motor is driven to move the ejector rod 210 rearward at a set movement speed, and thus the movable member 830 moves rearward to an original standby position.

The position or the movement speed of the ejector rod 210 is detected using, for example, an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### (Injection Unit)

Unlike the descriptions of the mold clamping unit 100 or the descriptions of the ejector unit 200, in descriptions of the injection unit 300, a movement direction (for example, the X-axis negative direction) of a screw 330 during filling is defined as the front side, and a movement direction (for example, the X-axis positive direction) of the screw 330 during plasticizing is defined as the rear side.

The injection unit 300 is installed on a slide base 301, and the slide base 301 is disposed so as to be movable forward or rearward with respect to the injection unit frame 920. The injection unit 300 is disposed so as to be movable forward or rearward with respect to the mold unit 800. The injection unit 300 touches the mold unit 800 and fills the cavity space 801 inside the mold unit 800 with the molding material. The injection unit 300 includes, for example, a cylinder 310, a nozzle 320, the screw 330, a plasticizing motor 340, an injection motor 350, and a pressure detector 360.

The cylinder 310 heats the molding material which is supplied from a supply port 311 to the inner portion of the cylinder 310. The molding material includes, for example, a resin. The molding material is formed, for example, in a pellet shape and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (for example, the X-axis direction) of the cylinder 310. The heating unit 313 and the temperature detector 314 are provided in each of the plurality of zones . The controller 700 controls the heating unit 313 such that a set temperature is set in each of the plurality of zones and a detection temperature of the temperature detector 314 becomes the set temperature.

The nozzle 320 is provided on the front end portion of the cylinder 310 and is pressed against the mold unit 800. The heating unit 313 and the temperature detector 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. When the screw 330 rotates, the molding material is fed forward along spiral grooves of the screw 330. The molding material is gradually melted by heat from the cylinder 310 while being fed forward. As the liquid molding material is fed to the front side of the screw 330 and is accumulated in a front portion of the cylinder 310, the screw 330 moves rearward. Thereafter, when the screw 330 moves forward, the liquid molding material accumulated in the front side of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents a backflow of the molding material from the front side of the screw 330 toward the rear side when the screw 330 is pressed forward.

When the screw 330 moves forward, the backflow prevention ring 331 is pressed toward the rear side by the pressure of the molding material in the front side of the screw 330 and moves rearward relatively with respect to the screw 330 to a close position (refer to Fig. 2) at which a flow path of the molding material is closed. Accordingly, the molding material accumulated in the front side of the screw 330 is prevented from flowing toward the rear side.

On the other hand, when the screw 330 rotates, the backflow prevention ring 331 is pressed toward the front side by the pressure of the molding material to be fed forward along the spiral grooves of the screw 330 and moves forward relatively with respect to the screw 330 to an open position (refer to Fig. 1) at which the flow path of the molding material is open. Accordingly, the molding material is fed to the front side of the screw 330.

The backflow prevention ring 331 may be any one of a co-rotation type ring which rotates together with the screw 330 or a non-co-rotation type ring which does not rotate together with the screw 330.

In addition, the injection unit 300 may include a drive source which causes the backflow prevention ring 331 to move forward or rearward with respect to the screw 330 between the open position and the close position.

The plasticizing motor 340 rotates the screw 330. A drive source which rotates the screw 330 is not limited to the plasticizing motor 340 and may be, for example, a hydraulic pump.

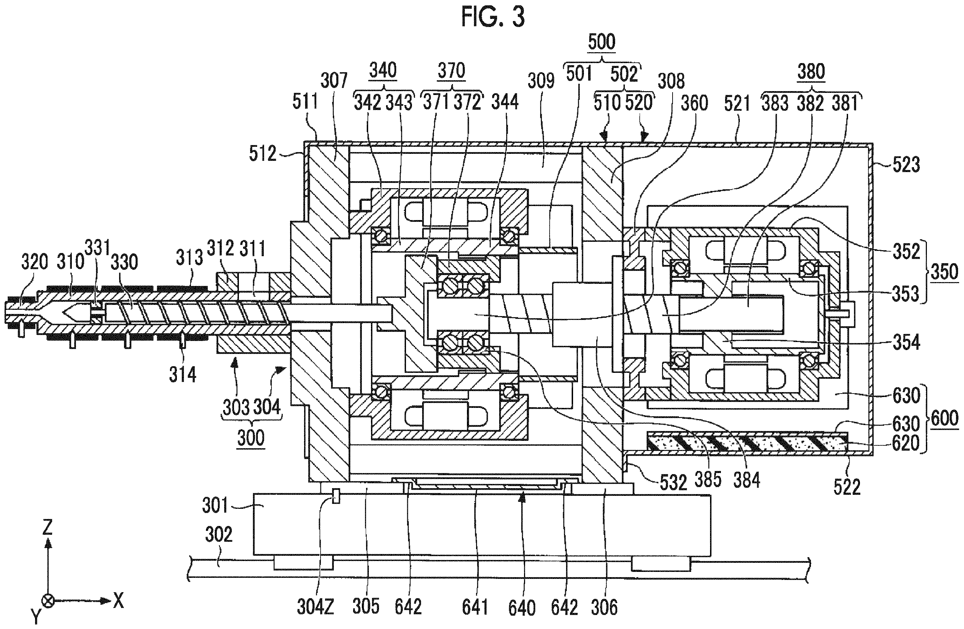

The injection motor 350 causes the screw 330 to move forward or rearward. A motion conversion mechanism or the like which converts a rotary motion of the injection motor 350 into a linear motion of the screw 330 is provided between the injection motor 350 and the screw 330. The motion conversion mechanism includes a screw shaft 382 and a screw nut 384 which is screwed onto the screw shaft 382 as shown in Fig. 3, for example. A ball, a roller, or the like may be provided between the screw shaft 382 and the screw nut 384. A drive source which causes the screw 330 to move forward or rearward is not limited to the injection motor 350 and may be, for example, a hydraulic cylinder.

The pressure detector 360 detects a force to be transmitted between the injection motor 350 and the screw 330. The detected force is converted into pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed, and thus the molding material is fed forward along the spiral grooves of the screw 330. According to this, the molding material is gradually melted. As the liquid molding material is fed to the front side of the screw 330 and is accumulated in the front portion of the cylinder 310, the screw 330 moves rearward. The rotating speed of the screw 330 is detected using, for example, a plasticizing motor encoder 341. The plasticizing motor encoder 341 detects the rotation of the plasticizing motor 340 and sends a signal indicating a detection result to the controller 700. In addition, a screw rotating speed detector which detects the rotating speed of the screw 330 is not limited to the plasticizing motor encoder 341, and a general detector may be used.

In the plasticizing process, in order to restrict an abrupt rearward movement of the screw 330, the injection motor 350 may be driven to add a set back pressure with respect to the screw 330. The back pressure with respect to the screw 330 is detected using, for example, the pressure detector 360. The pressure detector 360 sends a signal indicating a detection result to the controller 700. When the screw 330 moves rearward to a plasticizing completion position and a predetermined amount of the molding material is accumulated in the front side of the screw 330, the plasticizing process is completed.

The position and rotating speed of the screw 330 in the plasticizing process are collectively set as a series of setting conditions. For example, a plasticizing start position, a rotating speed switching position, and a plasticizing completion position are set. These positions are arranged in this order from the front side to the rear side and represent a start point and an end point of a section where the rotating speed is set. The rotating speed is set for each section. The rotating speed switching position may be one or more. The rotating speed switching position may not be set. Moreover, the back pressure is set for each section.

In the filling process, the injection motor 350 is driven to move the screw 330 forward at a set movement speed, and thus the cavity space 801 inside the mold unit 800 is filled with the liquid molding material accumulated in the front side of the screw 330. A position or movement speed of the screw 330 is detected using, for example, an injection motor encoder 351. The injection motor encoder 351 detects the rotation of the injection motor 350 and sends a signal indicating a detection result to the controller 700. When the position of the screw 330 reaches a set position, switching (so-called V/P switching) from the filling process to the holding pressure process is performed. A position at which the V/P switching is performed is also referred to as a V/P switching position. The set movement speed of the screw 330 may be changed according to the position of the screw 330, the time, or the like.

The position and movement speed of the screw 330 in the filling process are collectively set as a series of setting conditions. For example, a filling start position (also referred to as "injection start position"), a movement speed switching position, and a V/P switching position are set. These positions are arranged in this order from the rear side to the front side and represent a start point and an end point of a section where the movement speed is set. The movement speed is set for each section. The movement speed switching position may be one or more. The movement speed switching position may not be set.

The upper limit value of the pressure of the screw 330 is set for each section in which the movement speed of the screw 330 is set. The pressure of the screw 330 is detected by the pressure detector 360. In a case where a detection value of the pressure detector 360 is equal to or less than a set pressure, the screw 330 moves forward at a set movement speed. On the other hand, in a case where the detection value of the pressure detector 360 exceeds the set pressure, the screw 330 moves forward at a movement speed slower than the set movement speed such that the detection value of the pressure detector 360 is equal to or less than the set pressure for the purpose of mold protection.

In addition, in the filling process, the screw 330 may temporarily stop at the V/P switching position after the position of the screw 330 reaches the V/P switching position, and then the V/P switching may be performed. Immediately before the V/P switching, the screw 330 may move forward or rearward at a very slow speed instead of the stopping of the screw 330. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to press the screw 330 forward, and thus a pressure (hereinafter also referred to as a "holding pressure") of the molding material on a front end portion of the screw 330 is held at a set pressure and the molding material remaining inside the cylinder 310 is pressed toward the mold unit 800. Insufficient molding materials due to cooling shrinkage in the mold unit 800 can be replenished. The holding pressure is detected using, for example, the pressure detector 360. The pressure detector 360 sends a signal indicating a detection result to the controller 700. A set value of the holding pressure may be changed according to an elapsed time from the start of the holding pressure process or the like. A plurality of holding pressures and holding times for holding the holding pressure in the holding pressure process may be set, or the holding pressures and the holding time may be set collectively as a series of setting conditions.

In the holding pressure process, the molding material of the cavity space 801 in the mold unit 800 is gradually cooled, and an inlet of the cavity space 801 is closed by the solidified molding material when the holding pressure process is completed. This state is referred to as a gate seal, and the backflow of the molding material from the cavity space 801 is prevented. After the holding pressure process, a cooling process starts. In the cooling process, solidification of the molding material in the cavity space 801 is performed. The plasticizing process may be performed during the cooling process in order to shorten a molding cycle time.

In addition, the injection unit 300 according to the present embodiment is an inline screw type, but may be a preplasticizing type or the like. A preplasticizing type injection unit supplies the molding material melted inside a plasticizing cylinder to an injection cylinder and injects the molding material from the injection cylinder into the mold unit. In the plasticizing cylinder, a screw is disposed so as to be rotatable and non-movable forward or rearward, or a screw is disposed so as to be rotatable and movable forward or rearward. On the other hand, a plunger is disposed in the injection cylinder so as to be movable forward or rearward.

In addition, the injection unit 300 according to the present embodiment is the horizontal type in which the axial direction of the cylinder 310 is the horizontal direction, but may be the vertical type in which the axial direction of the cylinder 310 is the vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (for example, the X-axis negative direction) of the screw 330 during filling is defined as the front side, and the movement direction (for example, the X-axis positive direction) of the screw 330 during plasticizing is defined as the rear side.

The movement unit 400 causes the injection unit 300 to move forward or rearward with respect to the mold unit 800 . Moreover, the movement unit 400 presses the nozzle 320 with respect to the mold unit 800 to generate a nozzle touch pressure. The movement unit 400 includes a hydraulic pump 410, a motor 420 as a drive source, a hydraulic cylinder 430 as a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of the first port 411 and the second port 412 and is discharged from the other to generate a liquid pressure. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction and with the rotation torque corresponding to a control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 as a first chamber and a rear chamber 436 as a second chamber. The piston rod 433 is fixed to the stationary platen 110.

The front chamber 435 of the hydraulic cylinder 430 is connected to the first port 411 of the hydraulic pump 410 through a first flow path 401. The working liquid discharged from the first port 411 is supplied to the front chamber 435 through the first flow path 401, and thus the injection unit 300 is pressed forward. The injection unit 300 moves forward, and thus the nozzle 320 is pressed to the stationary mold 810. The front chamber 435 functions as a pressure chamber which generates the nozzle touch pressure of the nozzle 320 by the pressure of the working liquid supplied from the hydraulic pump 410.

On the other hand, the rear chamber 436 of the hydraulic cylinder 430 is connected to the second port 412 of the hydraulic pump 410 through a second flow path 402. The working liquid discharged from the second port 412 is supplied to the rear chamber 436 of the hydraulic cylinder 430 through the second flow path 402, and thus the injection unit 300 is pressed rearward. The injection unit 300 moves rearward, and thus the nozzle 320 is separated from the stationary mold 810.

In addition, the movement unit 400 includes the hydraulic cylinder 430 in the present embodiment, but the present invention is not limited thereto. For example, an electric motor and a motion conversion mechanism which converts a rotary motion of the electric motor into a linear motion of the injection unit 300 may be used instead of the hydraulic cylinder 430.

### (Controller)

The controller 700 is configured of, for example, a computer and includes a central processing unit (CPU) 701, a storage medium 702 such as a memory, an input interface 703, and an output interface 704 as shown in Figs. 1 and 2. The controller 700 causes the CPU 701 to execute a program stored in the storage medium 702 to perform various controls. Moreover, the controller 700 receives a signal from the outside through the input interface 703 and transmits a signal to the outside through the output interface 704.

The controller 700 repeats the plasticizing process, the mold closing process, the pressurizing process, the mold clamping process, the filling process, the holding pressure process, the cooling process, the depressurizing process, the mold opening process, the ejection process, and the like to repeatedly manufacture the molding product. A series of operations to obtain the molding product, for example, an operation from the start of the plasticizing process to the start of the next plasticizing process is also referred to as a "shot" or a "molding cycle". Moreover, a time required for one shot is also referred to as a "molding cycle time" or "cycle time".

For example, one molding cycle includes the plasticizing process, the mold closing process, the pressurizing process, the mold clamping process, the filling process, the holding pressure process, the coolingprocess, the depressurizingprocess, the mold opening process, and the ejection process in this order. This order herein is an order of the start of each process. The filling process, the holding pressure process, and the cooling process are performed during the mold clamping process. The start of the mold clamping process may coincide with the start of the filling process. The end of the depressurizing process coincides with the start of the mold opening process.

In addition, a plurality of processes may be simultaneously performed in order to shorten the molding cycle time. For example, the plasticizing process may be performed during the cooling process of the previous molding cycle or may be performed during the mold clamping process . In this case, the mold closing process may be performed at the beginning of the molding cycle . Moreover, the filling process may be started during the mold closing process . Moreover, the ejection process may be started during the mold opening process. In a case where an on and off valve which opens and closes the flow path of the nozzle 320 is provided, the mold opening process may be started during the plasticizing process. This is because the molding material does not leak from the nozzle 320 as long as the on and off valve closes the flow path of the nozzle 320 even when the mold opening process starts during the plasticizing process.

In addition, the one molding cycle may include a process other than the plasticizing process, the mold closing process, the pressurizing process, the mold clamping process, the filling process, the holding pressure process, the cooling process, the depressurizing process, the mold opening process, and the ejection process.

For example, a pre-plasticizing suck-back process in which the screw 330 moves rearward to a plasticizing start position set in advance may be performed after the completion of the holding pressure process and before the start of the plasticizing process. It is possible to reduce the pressure of the molding material accumulated in the front side of the screw 330 before the start of the plasticizing process and thus to prevent the abrupt rearward movement of the screw 330 at the start of the plasticizing process .

Moreover, a post-plasticizing suck-back process in which the screw 330 moves rearward to a filling start position (also referred to as "injection start position") set in advance may be performed after the completion of the plasticizing process and before the start of the filling process. It is possible to reduce the pressure of the molding material accumulated in the front side of the screw 330 before the start of the filling process and thus to prevent the leakage of the molding material from the nozzle 320 before the start of the filling process.

The controller 700 is connected to an operation unit 750 or the display unit 760. The operation unit 750 receives an input operation by a user and outputs a signal in response to an input operation to the controller 700. The display unit 760 displays a display screen in response to the input operation in the operation unit 750 under the control of the controller 700.

The display screen is used for the setting of the injection molding machine 10 or the like. A plurality of display screens are provided and displayed by switching or overlapping each other . A user operates the operation unit 750 while viewing the display screen displayed on the display unit 760 to perform the setting (including an input of a set value) of the injection molding machine 10 or the like.

The operation unit 750 and the display unit 760 may be configured of, for example, a touch panel and integrated with eachother. Inaddition, in the present embodiment, the operation unit 750 and the display unit 760 are integrated with each other, but may be provided independently. Moreover, a plurality of operation units 750 may be provided. The operation unit 750 and the display unit 760 are disposed on the negative side in the Y-axis direction of the mold clamping unit 100 (more specifically, the stationary platen 110). The negative side in the Y-axis direction is referred to as the operation side, and the positive side in the Y-axis direction is referred to as the non-operation side.

### (Details of Injection Unit)

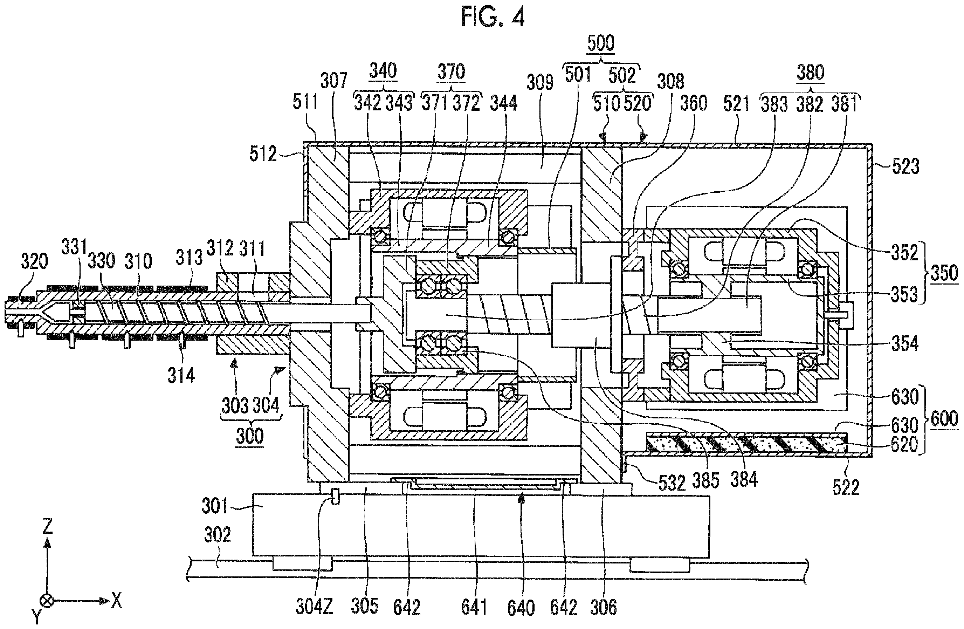

Fig. 3 is a view showing a state when an injection of the injection unit according to the embodiment is started. Fig. 4 is a view showing a state when the injection of the injection unit according to the embodiment is completed. The injection unit 300 includes an injection unit body 303 and a support frame 304 which supports the injection unit body 303. The injection unit body 303 includes, for example, the cylinder 310, the nozzle 320, the screw 330, the plasticizing motor 340, the injection motor 350, the pressure detector 360, a coupling 370, and a drive shaft 380.

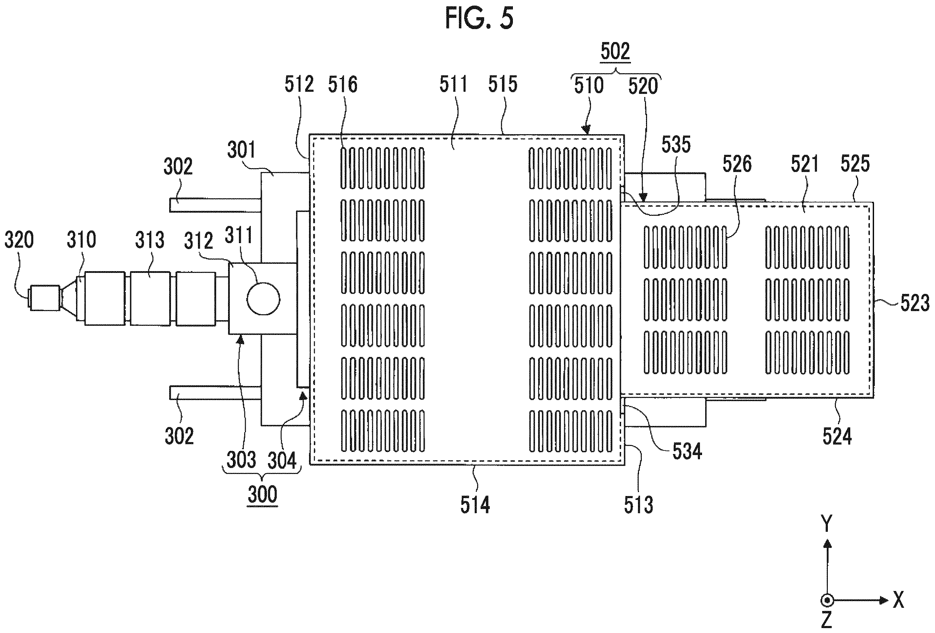

The support frame 304 is installed on the slide base 301. The slide base 301 moves forward or rearward along two guides 302 shown in Fig. 5. The two guides 302 are placed on the injection unit frame 920 as shown in Fig. 1. Each of the two guides 302 extends in the X-axis direction. The two guides 302 are disposed with an interval in the Y-axis direction. The support frame 304 is installed on the slide base 301 so as to be turnable with a vertical turning shaft 304Z as the center. The injection unit body 303 can be turned together with the support frame 304.

The support frame 304 includes a front turning plate 305 and a rear turning plate 306. The front turning plate 305 and the rear turning plate 306 are slidably placed on the upper surface of the slide base 301. The turning shaft 304Z is disposed at a predetermined position of the front turning plate 305. The rear turning plate 306 is disposed on the rear side of the front turning plate 305 (positive side in the X-axis direction).

The support frame 304 includes a front flange 307, a rear flange 308, and a plurality of connecting rods 309. The front flange 307 is attached to the front turning plate 305. The rear flange 308 is attached to the rear turning plate 306. The connecting rod 309 connects the front flange 307 and the rear flange 308 with an interval.

The cylinder 310 and the plasticizing motor 340 are attached to the front flange 307. The cylinder 310 is attached to the front surface of the front flange 307. The plasticizing motor 340 is attached to the rear surface of the front flange 307 and is disposed between the front flange 307 and the rear flange 308. On the other hand, the injection motor 350 is attached to the rear flange 308 through the pressure detector 360.

The plasticizing motor 340 rotates the screw 330. The plasticizing motor 340 includes a stator 342 which is fixed to the front flange 307 and a rotor 343 which rotates in the inner side of the stator 342. The rotary motion of the plasticizing motor 340 is transmitted to the coupling 370 and is transmitted from the coupling 370 to the screw 330.

The coupling 370 includes a screw attachment portion 371 to which the screw 330 is attached, and a plasticizing spline shaft 372 to which the rotor 343 of the plasticizing motor 340 is spline-coupled. The plasticizing spline shaft 372 is disposed inside the rotor 343 of the plasticizing motor 340. A plasticizing spline nut 344 is formed on the rotor 343. The plasticizing spline nut 344 has a plurality of key grooves disposed on the inner peripheral surface thereof at equal intervals in the circumferential direction. On the other hand, the plasticizing spline shaft 372 has a plurality of keys disposed on the outer peripheral surface thereof at equal intervals in the circumferential direction. The plasticizing spline shaft 372 and the plasticizing spline nut 344 are spline-coupled. In addition, the number of key grooves and the number of keys may be one.

The injection motor 350 causes the screw 330 to move forward or rearward. The injection motor 350 includes a stator 352 which is fixed to the rear flange 308 through the pressure detector 360 and a rotor 353 which rotates in the inner side of the stator 352. The rotary motion of the injection motor 350 is converted into the rotational linear motion of the drive shaft 380 described below and is converted into a linear motion of the coupling 370. As the coupling 370 moves forward or rearward, the screw 330 moves forward or rearward.

The drive shaft 380 has an injection spline shaft 381, a screw shaft 382, and a rotation shaft 383 on the same straight line in this order from the rear side toward the front side.

The injection spline shaft 381 is disposed inside the rotor 353 of the injection motor 350. An injection spline nut 354 is formed on the rotor 353. The injection spline nut 354 has a plurality of key grooves disposed on the inner peripheral surface thereof at equal intervals in the circumferential direction. On the other hand, the injection spline shaft 381 has a plurality of keys disposed on the outer peripheral surface thereof at equal intervals in the circumferential direction. The injection spline shaft 381 and the injection spline nut 354 are spline-coupled. In addition, the number of key grooves and the number of keys may be one.

The screw shaft 382 is screwed onto the screw nut 384. A ball or a roller may be interposed between the screw shaft 382 and the screw nut 384. Since the screw nut 384 is fixed to the rear flange 308 through the pressure detector 360, the screw nut 384 does not rotate together with the screw shaft 382. Accordingly, the screw shaft 382 moves forward or rearward while rotating. The injection spline shaft 381 and the injection spline nut 354 are spline-coupled such that the screw shaft 382 can move forward or rearward while rotating.

The rotation shaft 383 is held by the coupling 370 through a bearing 385. The coupling 370 has a cylindrical plasticizing spline shaft 372, and the bearing 385 is fixed to the inner peripheral surface of the plasticizing spline shaft 372. The bearing 385 includes an inner ring which rotates together with the rotation shaft 383 and an outer ring which is fixed to the plasticizing spline shaft 372. The bearing 385 prevents the transmission of the rotation driving force from the rotation shaft 383 to the coupling 370.

The rotation shaft 383 moves forward or rearward while rotating, and thus the coupling 370 moves forward or rearward and the screw 330 moves forward or rearward. When the screw 330 moves forward or rearward, the plasticizing motor 340 does not move forward or rearward. This is because the plasticizing spline nut 344 of the plasticizing motor 340 and the plasticizing spline shaft 372 of the coupling 370 are spline-coupled. Since the plasticizing motor 340 is not included in a driving target of the injection motor 350, the inertia of the driving target of the injection motor 350 is small and the acceleration at the start of the forward movement of the screw 330 is fast.

In addition, a structure of the injection unit 300 is not limited to the structure shown in Figs. 3 and 4.

For example, the disposition of drive sources (for example, the plasticizing motor 340 and the injection motor 350) which drives the screw 330 is not limited to the disposition shown in Figs. 3 and 4. Specifically, a rotation center line of the screw 330, a rotation center line of the plasticizing motor 340, and a rotation center line of the injection motor 350 are disposed on the same straight line in the present embodiment, but may not be disposed on the same straight line.

Moreover, a structure of the transmission mechanism which transmits the driving force of the drive source to the screw 330 is not limited to the structure shown in Figs. 3 and 4. The structure of the transmission mechanism is changed as appropriate according to the disposition of the drive source which drives the screw 330. For example, in a case where the rotation center line of the plasticizing motor 340 and the rotation center line of the screw 330 which are parallel to each other are disposed in a shifted manner in a direction perpendicular to these rotation center lines, a timing belt may be used. Similarly, in a case where the rotation center line of the injection motor 350 and the rotation center line of the screw 330 which are parallel to each other are disposed in a shifted manner in a direction perpendicular to these rotation center lines, a timing belt may be used.

### (Drive Shaft Cover)

Meanwhile, the drive shaft 380 is supplied with a lubricant such as grease. When the injection motor 350 is driven to rotate the drive shaft 380, the lubricant is scattered from the drive shaft 380 by centrifugal force.

The injection molding machine 10 includes a drive shaft cover 501 which covers the drive shaft 380. The drive shaft cover 501 suppresses the scattering of the lubricant from the drive shaft 380 toward the outer side in the radial direction of the drive shaft 380. The drive shaft cover 501 is formed, for example, in a cylindrical shape extending in the X-axis direction. The drive shaft 380 is disposed at the center of the drive shaft cover 501 when viewed in the X-axis direction.

The drive shaft cover 501 is disposed between the plasticizing motor 340 and the rear flange 308 and suppresses the scattering of the lubricant from therebetween. The drive shaft cover 501 is fixed to, for example, the plasticizing spline nut 344. When the drive shaft 380 moves forward or rearward while rotating in the injection process, the plasticizing spline nut 344 does not move forward or rearward and thus the drive shaft cover 501 also does not move forward or rearward. It is not necessary to ensure a space for the drive shaft cover 501 to move forward or rearward in order to prevent interference between the drive shaft cover 501 and other members.

In addition, the drive shaft cover 501 is fixed to the plasticizing spline nut 344 in the present embodiment, but may be fixed to the rear flange 308. In this case, when the drive shaft 380 moves forward or rearward while rotating in the injection process, the rear flange 308 does not move forward or rearward and thus the drive shaft cover 501 also does not move forward or rearward.

In addition, the drive shaft cover 501 may be fixed to a member which moves forward or rearward together with the drive shaft 380. For example, the drive shaft cover 501 may be fixed to the plasticizing spline shaft 372. In this case, it is also possible to suppress the scattering of the lubricant from the drive shaft 380 toward the outer side in the radial direction of the drive shaft 380.

### (Injection Unit Cover)

Fig. 5 is a top view of the injection unit cover according to the embodiment. Hereinafter, an injection unit cover 502 will be described with reference to Figs. 3 to 5. The injection molding machine 10 includes the injection unit cover 502 which covers the injection unit 300. The injection unit cover 502 and the drive shaft cover 501 constitute a cover 500.

The injection unit cover 502 houses therein a drive source of the injection unit 300 and a transmission mechanism which transmits a driving force of the drive source of the injection unit 300 to the screw 330. The drive source of the injection unit 300 includes, for example, the plasticizing motor 340. The transmission mechanism which transmits the driving force of the plasticizing motor 340 to the screw 330 includes, for example, the coupling 370. Moreover, the drive source of the injection unit 300 includes the injection motor 350. The transmission mechanism which transmits the driving force of the injection motor 350 to the screw 330 includes, for example, the drive shaft 380.

The injection unit cover 502 is attached to the support frame 304. The injection unit cover 502 is disposed so as to surround the support frame 304. The injection unit cover 502 includes, for example, a front cover 510 and a rear cover 520 disposed on the rear side of the front cover 510.

The front cover 510 is disposed so as to surround the support frame 304. The front cover 510 houses therein the plasticizing motor 340 and the coupling 370. As shown in Fig. 5, the front cover 510 includes an upper surface panel 511, a front surface panel 512, a rear surface panel 513, a side surface panel 514 on the operation side (negative side in the Y-axis direction), and a side surface panel 515 on the non-operation side (positive side in the Y-axis direction) . The front cover 510 is assembled in a box shape and opened downward.

The upper surface panel 511 is formed in a rectangular shape when viewed from above. As shown in Figs. 3 and 4, the upper surface panel 511 is fixed to the upper surface of the front flange 307 and the upper surface of the rear flange 308 with a bolt or the like. The upper surface panel 511 is disposed horizontally.

A plurality of outside air inlets 516 are formed in the upper surface panel 511 as shown in Fig. 5. The plurality of outside air inlets 516 are disposed in a matrix shape. The outside air introduced from the plurality of outside air inlets 516 absorbs the heat of the plasticizing motor 340 and is discharged below the front cover 510.

In addition, a position of the outside air inlet 516 is not limited to the upper surface panel 511. The position of the outside air inlet 516 is at least one or more of the upper surface panel 511, the front surface panel 512, the rear surface panel 513, the side surface panel 514 on the operation side, and the side surface panel 515 on the non-operation side.

The front surface panel 512 extends downward from the front end portion of the upper surface panel 511. The front surface panel 512 is disposed on the front side of the front flange 307. On the other hand, the rear surface panel 513 extends downward from the rear end portion of the upper surface panel 511. The rear surface panel 513 is disposed on the rear side of the rear flange 308. The front surface panel 512 and the rear surface panel 513 are disposed vertically.

The side surface panel 514 extends downward from the end portion of the upper surface panel 511 on the operation side. The side surface panel 514 is disposed on the operation side of the front flange 307 and the rear flange 308. On the other hand, the side surface panel 515 extends downward from the end portion of the upper surface panel 511 on the non-operation side. The side surface panel 515 is disposed on the non-operation side of the front flange 307 and the rear flange 308. These side surface panels 514 and 515 are disposed vertically.

The rear cover 520 houses therein the injection motor 350. As shown in Fig. 5, the rear cover 520 includes an upper surface panel 521, a lower surface panel 522 (refer to Fig. 3), a rear surface panel 523, a side surface panel 524 on the operation side, and a side surface panel 525 on the non-operation side. The rear cover 520 is assembled in a box shape and opened forward. An internal space of the rear cover 520 and an internal space of the front cover 510 communicate with each other.

The upper surface panel 521 is formed in a rectangular shape when viewed from above. The upper surface panel 521 is disposed horizontally.

A plurality of outside air inlets 526 are formed in the upper surface panel 521 as shown in Fig. 5. The plurality of outside air inlets 526 are disposed in a matrix shape. The outside air introduced from the plurality of outside air inlets 526 absorbs heat from the injection motor 350, flows from the internal space of the rear cover 520 to the internal space of the front cover 510, and is discharged below the front cover 510.

In addition, a position of the outside air inlet 526 is not limited to the upper surface panel 521. The position of the outside air inlet 526 is at least one or more of the upper surface panel 521, the lower surface panel 522, the rear surface panel 523, the side surface panel 524 on the operation side, and the side surface panel 525 on the non-operation side.

Similar to the upper surface panel 521, the lower surface panel 522 is formed in a rectangular shape when viewed from above. A vertical plate 532 is provided on the front end portion of the lower surface panel 522, and the vertical plate 532 is fixed to the rear surface of the rear flange 308 with a bolt or the like. The lower surface panel 522 is disposed horizontally.

The rear surface panel 523 extends from the rear end portion of the upper surface panel 521 to the rear end portion of the lower surface panel 522. The rear surface panel 523 is disposed vertically. In addition, the rear surface panel 523 is disposed vertically in the present embodiment, but may be disposed so as to be inclined rearward toward the bottom.

The side surface panel 524 extends downward from the end portion of the upper surface panel 521 on the operation side to the end portion of the lower surface panel 522 on the operation side. A vertical plate 534 is provided on the front end portion of the side surface panel 524, and the vertical plate 534 is fixed to the rear surface of the rear flange 308 with a bolt or the like. The side surface panel 524 is disposed vertically.

The side surface panel 525 extends downward from the end portion of the upper surface panel 521 on the non-operation side to the end portion of the lower surface panel 522 on the non-operation side. A vertical plate 535 is provided on the front end portion of the side surface panel 525, and the vertical plate 535 is fixed to the rear surface of the rear flange 308 with a bolt or the like. The side surface panel 525 is disposed vertically.

### (Soundproof Portion)

The drive shaft cover 501 surrounds the drive shaft 380. The drive shaft 380 is a noise generation source which generates a noise propagating to the outside of the drive shaft cover 501. The drive shaft cover 501 is a generation source cover which surrounds the noise generation source. In addition, the generation source cover is not limited to the drive shaft cover 501. The generation source cover may be, for example, a nut cover which covers the screw nut 384, a plasticizing motor cover which covers the plasticizing motor 340, or an injection motor cover which covers the inj ectionmotor 350. The generation source cover may surround the noise generation source.

The injection unit cover 502 is a housing cover which houses the drive shaft cover 501 therein. The injection unit cover 502 houses therein the drive source of the injection unit 300 and the transmission mechanism which transmits the driving force of the drive source of the injection unit 300 to the screw 330. The drive source of the injection unit 300 includes, for example, the plasticizing motor 340. The transmission mechanism which transmits the driving force of the plasticizing motor 340 to the screw 330 includes, for example, the coupling 370. Moreover, the drive source of the injection unit 300 includes the injection motor 350. The transmission mechanism which transmits the driving force of the injection motor 350 to the screw 330 includes, for example, the drive shaft 380. The drive source of the injection unit 300 and the transmission mechanism of the injection unit 300 are the noise generation sources which generate a noise propagating to the outside of the injection unit cover 502.

The noise propagating to the outside of the injection unit cover 502 includes a noise generated inside the injection unit cover 502. The noise generated inside the injection unit cover 502 propagates from the inside of the injection unit cover 502 to the outside of the injection unit cover 502 and is heard outside the injection unit cover 502.

The noise generated inside the injection unit cover 502 includes a noise generated inside the drive shaft cover 501. The noise generated inside the drive shaft cover 501 propagates from the inside of the drive shaft cover 501 to the outside of the drive shaft cover 501, further propagates from the inside of the injection unit cover 502 to the outside of the injection unit cover 502, and is heard outside the injection unit cover 502.

The noise generated inside the injection unit cover 502 is, for example, an impact sound. For example, the rotor 353 of the injection motor 350 rotates in the reverse direction in the filling process and the plasticizing process. Since the molding cycle is repeated, the filling process and the plasticizing process are performed alternately. Therefore, an impact due to the backlash between the injection spline nut 354 and the injection spline shaft 381 is generated at the time of the start of the filling process and the start of the plasticizing process, and a vibration is subsequently generated by the impact. Therefore, the impact sound is generated and a vibration sound is subsequently generated. The impact sound is a sound generated by the impact. The vibration sound is a sound generated by the vibration. The vibration sound is also generated by causes other than the impact. For example, when the drive of the drive source is started and stopped, the vibration is generated due to the abrupt change in the driving force, and thus the vibration sound is generated.

In addition, the noise generated inside the injection unit cover 502 is not limited to the impact sound and the vibration sound. For example, the noise generated inside the injection unit cover 502 may be a friction sound generated by friction between machine elements or a wind noise generated by a movement of a machine element.

The noise propagating to the outside of the injection unit cover 502 includes a vibration sound generated by the vibration of the injection unit cover 502. The vibration of the injection unit cover 502 is caused by an impact generated inside the injection unit cover 502. Accordingly, vibration sound is heard outside the injection unit cover 502 following the impact sound. In addition, the vibration of the injection unit cover 502 is generated by a vibration generated inside the injection unit cover 502 in addition to the impact generated inside the injection unit cover 502.

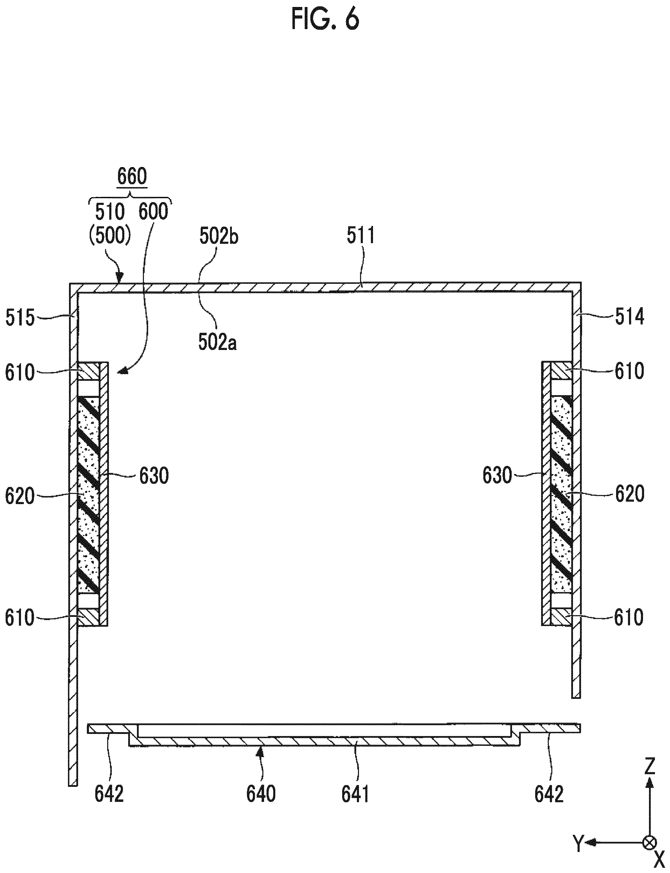

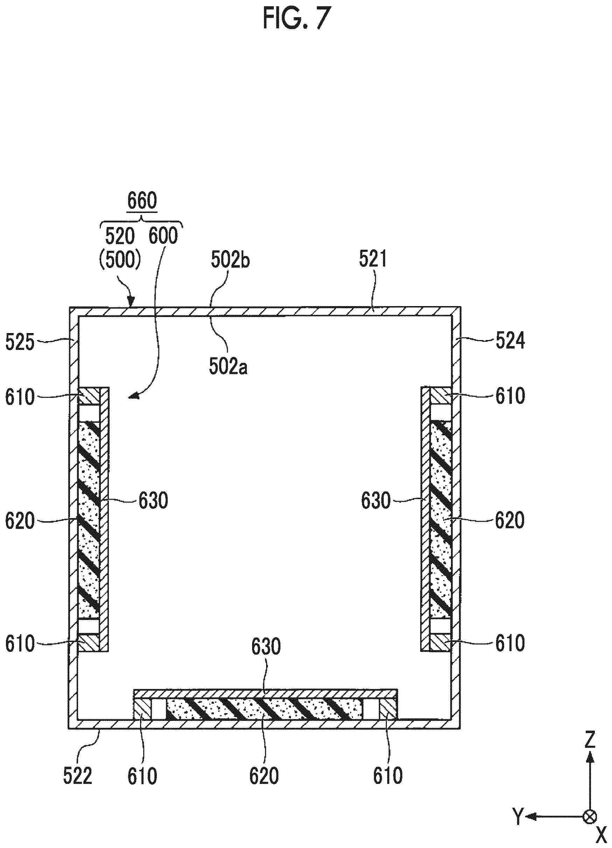

Fig. 6 is a cross-sectional view of a front cover and an oil pan according to the embodiment. Fig. 7 is a cross-sectional view of a rear cover according to the embodiment. As shown in Figs. 6 and 7, the injection molding machine 10 includes a soundproof portion 600 which reduces the noise propagating to the outside of the injection unit cover 502. It is possible to reduce the noise which is heard outside the injection unit cover 502 and thus to improve the work efficiency of an operator.

The soundproof portion 600 may not be attached to the injection unit cover 502 as described below, but is attached to the injection unit cover 502 in the present embodiment. In the present embodiment, the injection unit cover 502 and the soundproof portion 600 constitute an injection unit cover 660 with a soundproof portion.

The soundproof portion 600 includes a rib portion 610 which suppresses the vibration of the injection unit cover 502 by reinforcing the injection unit cover 502. The rib portion 610 suppresses the vibration of the injection unit cover 502 to reduce the vibration sound generated by the vibration of the injection unit cover 502. Since the injection unit cover 502 is manufactured by assembling thin panels, the injection unit cover 502 is easy to vibrate.

The rib portion 610 is, for example, a rod-like protrusion which is attached to an inner wall surface 502a of the injection unit cover 502. In addition, the rib portion 610 may be attached to any one of the inner wall surface 502a of the injection unit cover 502 or an outer wall surface 502b of the injection unit cover 502, or may be attached to both wall surfaces . In any case, it is possible to reinforce the injection unit cover 502 and thus to suppress the vibration of the injection unit cover 502.

The longitudinal direction of the rib portion 610 is not particularly limited, but is, for example, the same direction as a forward and rearward direction (X-axis direction) of the screw 330. When the screw 330 moves forward or rearward, it is possible to efficiently suppress the vibration of the injection unit cover 502. This is because the vibration of the injection unit cover 502 is mainly generated in the forward and rearward direction of the screw 330.

An attachment position of the rib portion 610 on the front cover 510 is, for example, two side surface panels 514 and 515 as shown in Fig. 6. Apluralityof (for example, two) rib portions 610 with an interval in a direction (for example, the Z-axis direction) perpendicular to the longitudinal direction (for example, the X-axis direction) of the rib portion 610 are attached to each of the two side surface panels 514 and 515.

In addition, the attachment position of the rib portion 610 on the front cover 510 is not limited to the attachment positions shown in Fig. 6. The attachment position of the rib portion 610 on the front cover 510 is one or more of the upper surface panel 511, the front surface panel 512, the rear surface panel 513, the side surface panel 514 on the operation side, and the side surface panel 515 on the non-operation side.

An attachment position of the rib portion 610 on the rear cover 520 is, for example, two side surface panels 524 and 525 and the lower surface panel 522 as shown in Fig. 7. A plurality of (for example, two) rib portions 610 with an interval in a direction (for example, the Z-axis direction) perpendicular to the longitudinal direction (for example, the X-axis direction) of the rib portion 610 are attached to each of the two side surface panels 524 and 525. Moreover, a plurality of (for example, two) rib portions 610 with an interval in a direction (for example, the Y-axis direction) perpendicular to the longitudinal direction (for example, the X-axis direction) of the rib portion 610 are attached to the lower surface panel 522.

In addition, the attachment position of the rib portion 610 on the rear cover 520 is not limited to the attachment positions shown in Fig. 7. The attachment position of the rib portion 610 on the rear cover 520 is one or more of the upper surface panel 521, the lower surface panel 522, the rear surface panel 523, the side surface panel 524 on the operation side, and the side surface panel 525 on the non-operation side.

The soundproof portion 600 includes, for example, a porous portion 620 which attenuates a sound wave propagating from the noise generation source, between the noise generation source inside the injection unit cover 502 and the injection unit cover 502. The porous portion 620 is, for example, a sponge having open cells. The sponge is also referred to as foam. The sponge is made by foaming rubber or resin. In addition, the porous portion 620 may be a nonwoven fabric or a woven fabric including a plurality of fibers. The fiber may be any one of an inorganic fiber or an organic fiber.

The porous portion 620 converts sound energy incident on the porous portion 620 into heat energy to attenuate the sound wave. When the sound wave is incident on the porous portion 620, air vibrates inside the porous portion 620. Therefore, the friction is generated between the porous portion 620 and the air, and the sound energy is converted into the heat energy. The porous portion 620 may have a plurality of holes through which outside air passes.

The porous portion 620 is disposed between the noise generation source inside the injection unit cover 502 and the injection unit cover 502, and attenuates the sound wave propagating from the noise generation source. Accordingly, it is possible to reduce the noise which is generated inside the injection unit cover 502 and leaks from the inside of the injection unit cover 502 to the outside of the injection unit cover 502 (for example, impact sound due to backlash).

The porous portion 620 may be disposed between the noise generation source inside the injection unit cover 502 and the injection unit cover 502, and may not be attached to the injection unit cover 502. In the present embodiment, the porous portion 620 is attached to the injection unit cover 502. In addition, in a case where the porous portion 620 is not attached to the injection unit cover 502, the porous portion 620 is attached to, for example, the support frame 304.

In a case where the porous portion 620 is attached to the injection unit cover 502, the porous portion 620 is attached to the inner wall surface 502a of the injection unit cover 502. It is possible to attenuate the sound wave inside the injection unit cover 502 and thus to reduce the noise (for example, impact sound) which leaks from the inside of the injection unit cover 502 to the outside of the injection unit cover 502.

An attachment position of the porous portion 620 on the front cover 510 is, for example, two side surface panels 514 and 515 as shown in Fig. 6. In addition, the attachment position of the porous portion 620 on the front cover 510 is not limited to the attachment positions shown in Fig. 6. The attachment position of the porous portion 620 on the front cover 510 is one or more of the upper surface panel 511, the front surface panel 512, the rear surface panel 513, the side surface panel 514 on the operation side, and the side surface panel 515 on the non-operation side.

The attachment position of the porous portion 620 on the rear cover 520 is, for example, the lower surface panel 522 and the two side surface panels 524 and 525 as shown in Fig. 7. In addition, the attachment position of the porous portion 620 on the rear cover 520 is not limited to the attachment positions shown in Fig. 7. The attachment position of the porous portion 620 on the rear cover 520 is one or more of the upper surface panel 521, the lower surface panel 522, the rear surface panel 523, the side surface panel 524 on the operation side, and the side surface panel 525 on the non-operation side.

Meanwhile, the drive source of the injection unit 300 and the transmission mechanism which transmits the driving force of the drive source of the injection unit 300 to the screw 330 are disposed inside the injection unit cover 502. As described above, the transmission mechanism includes, for example, the coupling 370 and the drive shaft 380. The lubricant such as grease is supplied to the coupling 370 or the drive shaft 380.

When the plasticizing motor 340 is driven to rotate the coupling 370, the lubricant is scattered from the coupling 370 by centrifugal force. Moreover, when the injection motor 350 is driven to rotate the drive shaft 380, the lubricant is scattered from the drive shaft 380 by the centrifugal force.

The soundproof portion 600 further includes a protection cover portion 630 which protects the porous portion 620 from a side opposite to the injection unit cover 502. As shown in Figs. 6 and 7, the protection cover portion 630 is disposed on the side opposite to the injection unit cover 502 with the porous portion 620 as the reference.

The protection cover portion 630 is disposed between the porous portion 620 and the transmission mechanism when viewed in the forward-rearward direction (X-axis direction). It is possible to restrict the lubricant of the transmission mechanism from adhering to the porous portion 620 and thus to suppress pores of the porous portion 620 from being closed. Accordingly, it is possible to reduce the replacement frequency of the porous portion 620.

The protection cover portion 630 may be disposed between the porous portion 620 and the transmission mechanism when viewed in the forward-rearward direction and may not be attached to the injection unit cover 502. In the present embodiment, the protection cover portion 630 is attached to the injection unit cover 502. In addition, in a case where the protection cover portion 630 is not attached to the injection unit cover 502, the protection cover portion 630 is attached to, for example, the support frame 304.

In a case where the protection cover portion 630 is attached to the injection unit cover 502, the protection cover portion 630 is bridged over a plurality of rib portions 610 as shown in Figs. 6 and 7 in order to reinforce the injection unit cover 502. The plurality of rib portions 610 are connected by the protection cover portion 630. It is possible to further suppress the vibration of the injection unit cover 502 and thus to further reduce the vibration sound generated by the vibration thereof.

The porous portion 620 is housed in a space surrounded by the protection cover portion 630, the injection unit cover 502, and the two rib portions 610. The porous portion 620 is formed in a sheet shape. The space in which the porous portion 620 is housed is open on both sides of the two rib portions 610 in the longitudinal direction (for example, positive side in the X-axis direction and negative side in the X-axis direction) as shown in Fig. 3. The noise generated inside the injection unit cover 502 enters the porous portion 620 from both sides of the two rib portions 610 in the longitudinal direction.

The protection cover portion 630 and the rib portion 610 are fixed so as to be separable by a bolt or the like. It is possible to facilitate the replacement work of the porous portion 620 by separating the protection cover portion 630 from the rib portion 610. After the replacement of the porous portion 620, the protection cover portion 630 and the rib portion 610 are fixed again to be separable with a bolt or the like.

The protection cover portion 630 is disposed at a position which does not hinder the flow of the outside air from the outside air inlet 516 of the front cover 510 toward the plasticizing motor 340. The protection cover portion 630 is disposed so as not to close the outside air inlet 516 of the front cover 510.

Similarly, the protection cover portion 630 is disposed at a position which does not hinder the flow of the outside air from the outside air inlet 526 of the rear cover 520 toward the injectionmotor 350. The protection cover portion 630 is disposed so as not to close the outside air inlet 526 of the rear cover 520.

The injection molding machine 10 includes an oil pan 640. The oil pan 640 includes a box-shaped storing portion 641 which stores the lubricant falling from the transmission mechanism and a plurality of ear portions 642 which extend horizontally from the upper end of the storing portion 641. As shown in Fig. 3, the ear portion 642 on the front side is placed on the front turning plate 305, and the ear portion 642 on the rear side is placed on the rear turning plate 306. The oil pan 640 is bridged between the front turning plate 305 and the rear turning plate 306. When the support frame 304 is turned, the oil pan 640 can be turned together with the support frame 304.

### (Modification Example and the like)

The embodiment of the injection molding machine and the like have been described, but the present invention is not limited to the above embodiment. Various changes, modifications, substitutions, additions, deletions, and combinations can be made within the scope of the claims. Needless to say, the above also belongs to the technical scope of the present invention.

For example, the noise reduced by the soundproof portion 600 is not limited to the noise propagating to the outside of the injection unit cover 502. Moreover, the cover to which the soundproof portion 600 is attached is not limited to the injection unit cover 502. Hereinafter, specific examples thereof will be described.

The noise reduced by the soundproof portion 600 may be a noise propagating to the outside of the drive shaft cover 501. The soundproof portion 600 can also reduce the noise propagating to the outside of the injection unit cover 502 by reducing the noise propagating to the outside of the drive shaft cover 501. The soundproof portion 600 is attached to, for example, the drive shaft cover 501 in the case of reducing the noise propagating to the outside of the drive shaft cover 501. In addition, the porous portion 620 of the soundproof portion 600 may be provided inside the drive shaft cover 501 and may not be attached to the drive shaft cover 501 in the case of reducing the noise propagating to the outside of the drive shaft cover 501. The porous portion 620 of the soundproof portion 600 may be disposed between the drive shaft cover 501 and the drive shaft 380 in the case of reducing the noise propagating to the outside of the drive shaft cover 501. In addition, the cover to which the soundproof portion 600 can be attached may be at least one of the injection unit cover 502 and the drive shaft cover 501 or may be both covers in the case of reducing the noise propagating to the outside of the injection unit cover 502.

The noise reduced by the soundproof portion 600 may be a noise propagating to the outside of the mold clamping unit cover. The mold clamping unit cover houses therein a drive source of the mold clamping unit 100 and a transmission mechanism which transmits the driving force of the drive source of the mold clamping unit 100 to the movable platen 120. The drive source of the mold clamping unit 100 includes, for example, a mold clamping motor 160. The transmission mechanism which transmits the driving force of the mold clamping motor 160 to the movable platen 120 includes, for example, the motion conversion mechanism 170 and the toggle mechanism 150. The drive source of the mold clamping unit 100 and the transmission mechanism of the mold clamping unit 100 are noise generation sources which generate the noise propagating to the outside of the mold clamping unit cover. The soundproof portion 600 is attached to, for example, the mold clamping unit cover in the case of reducing the noise propagating to the outside of the mold clamping unit cover. In addition, the porous portion 620 of the soundproof portion 600 may be provided inside the mold clamping unit cover and may not be attached to the mold clamping unit cover in the case of reducing the noise propagating to the outside of the mold clamping unit cover. The porous portion 620 of the soundproof portion 600 may be disposed between the mold clamping unit cover and the noise generation source in the case of reducing the noise propagating to the outside of the mold clamping unit cover.

The noise reduced by the soundproof portion 600 may be a noise propagating to the outside of the frame 900 and a frame cover. The frame cover covers an opening portion of the frame 900. The controller 700 is disposed inside the frame 900 and the frame cover. The controller 700 is a noise generation source which generates the noise propagating to the outside of the frame 900 and the frame cover. The soundproof portion 600 is attached to, for example, the frame 900 and/or the frame cover in a case of reducing the noise propagating to the outside of the frame 900 and the frame cover. In addition, the porous portion 620 of the soundproof portion 600 may be provided inside the frame 900 and the frame cover and may not be attached to any one of the frame 900 and the frame cover in the case of reducing the noise propagating to the outside of the frame 900 and the frame cover. The porous portion 620 of the soundproof portion 600 may be disposed between the frame 900 and/or the frame cover and the noise generation source in the case of reducing the noise propagating to the outside of the frame 900 and the frame cover.

### Brief Description of the Reference Symbols

- 10:: injection molding machine
- 300:: injection unit
- 500:: cover
- 501:: drive shaft cover (generation source cover)
- 502:: injection unit cover (housing cover)
- 600:: soundproof portion
- 610:: rib portion
- 620:: porous portion
- 630:: protection cover portion
- 660:: injection unit cover with soundproof portion (cover with soundproof portion)

## Claims

1. An injection molding machine (10) comprising:
a cover (500) which surrounds a noise generation source of the injection molding machine (10); and
a soundproof portion (600) which reduces a noise propagating to an outside of the cover (500),
wherein the soundproof portion (600) includes a porous portion (620) which attenuates a sound wave propagating from the noise generation source, between the noise generation source and the cover (500), **characterised in that** the soundproof portion (600) includes a rib portion (610) which reinforces the cover (500) to suppress a vibration of the cover (500), and that
the soundproof portion (600) further includes a protection cover portion (630) which protects the porous portion (620) from a side opposite to the cover (500).

2. The inj ection molding machine (10) according to claim 1,
wherein the soundproof portion (600) includes a plurality of rib portions (610) which is formed on an inner wall surface (502a) of the cover (500) and reinforces the cover (500) to suppress a vibration of the cover (500), a porous portion (620) which is disposed between the plurality of rib portions (610) and attenuates a sound wave propagating from the noise generation source, and a protection cover portion (630) which is bridged between the plurality of rib portions (610) and protects the porous portion (620) from a side opposite to the cover (500).

3. The injection molding machine (10) according to claim 1 or 2,
wherein the cover (500) includes a generation source cover (501) which surrounds the noise generation source and a housing cover (502) which houses the generation source cover (501), and
wherein the soundproof portion (600) reduces a noise propagating to an outside of the housing cover (502).

4. The injection molding machine (10) according to any one of claims 1 to 3, further comprising:
an injection unit (300) including a cylinder (310) which heats a molding material, a screw (330) which is disposed inside the cylinder (310) so as to be rotatable and movable forward or rearward, a drive source which drives the screw (330), and a transmission mechanism which transmits a driving force of the drive source to the screw (330),
wherein the cover (500) includes an injection unit cover (502) which houses the drive source of the injection unit (300) and the transmission mechanism of the injection unit (300).

5. The injection molding machine (10) according to any one of claims 1 to 4, further comprising:
a mold clamping unit (100) including a stationary platen (110) to which a stationary mold (810) is attached, a movable platen (120) to which a movable mold (820) is attached, a drive source which causes the movable platen (120) to move forward or rearward, and a transmission mechanism which transmits a driving force of the drive source to the movable platen (120),
wherein the cover (500) includes a mold clamping unit cover which houses the drive source of the mold clamping unit (100) and the transmission mechanism of the mold clamping unit (100) .

## Patentansprüche

1. Spritzgießmaschine (10), umfassend:
eine Abdeckung (500), die eine Geräuscherzeugungsquelle der Spritzgießmaschine (10) umgibt; und
einen schallisolierenden Abschnitt (600), der eine Ausbreitung von Geräuschen zu einer Außenseite der Abdeckung (500) reduziert,
wobei der schallisolierende Abschnitt (600) einen porösen Abschnitt (620) enthält, der eine sich von der Geräuscherzeugungsquelle ausbreitende Schallwelle zwischen der Geräuscherzeugungsquelle und der Abdeckung (500) dämpft, **dadurch gekennzeichnet, dass**
der schallisolierende Abschnitt (600) einen Rippenabschnitt (610) enthält, der die Abdeckung (500) verstärkt, um eine Vibration der Abdeckung (500) zu unterdrücken, und dass
der schallisolierende Abschnitt (600) ferner einen Schutzabdeckungsabschnitt (630) enthält, der den porösen Abschnitt (620) von einer der Abdeckung (500) gegenüberliegenden Seite schützt.

2. Spritzgießmaschine (10) nach Anspruch 1,
wobei der schallisolierende Abschnitt (600) mehrere Rippenabschnitte (610) enthält, die an einer Innenwandfläche (502a) der Abdeckung (500) ausgebildet sind und die Abdeckung (500) verstärken, um eine Vibration der Abdeckung (500) zu unterdrücken, einen porösen Abschnitt (620), der zwischen den mehreren Rippenabschnitten (610) angeordnet ist und eine sich von der Geräuscherzeugungsquelle ausbreitende Schallwelle dämpft, und einen Schutzabdeckungsabschnitt (630), der zwischen den mehreren Rippenabschnitten (610) verbrückt ist und den porösen Abschnitt (620) von einer der Abdeckung (500) gegenüberliegenden Seite schützt.

3. Spritzgießmaschine (10) nach Anspruch 1 oder 2,
wobei die Abdeckung (500) eine Erzeugungsquellenabdeckung (501), die die Geräuscherzeugungsquelle umgibt, und eine Gehäuseabdeckung (502), die die Erzeugungsquellenabdeckung (501) aufnimmt, enthält, und
wobei der schallisolierende Abschnitt (600) ein Geräusch reduziert, das sich zu einer Außenseite der Gehäuseabdeckung (502) ausbreitet.

4. Spritzgießmaschine (10) nach einem der Ansprüche 1 bis 3, ferner umfassend:
eine Einspritzeinheit (300), die einen Zylinder (310), der ein Formmaterial erwärmt, eine Schnecke (330), die innerhalb des Zylinders (310) so angeordnet ist, dass sie drehbar und vorwärts oder rückwärts bewegbar ist, eine Antriebsquelle, die die Schnecke (330) antreibt, und einen Übertragungsmechanismus, der eine Antriebskraft der Antriebsquelle auf die Schnecke (330) überträgt, enthält
wobei die Abdeckung (500) eine Einspritzeinheitsabdeckung (502) enthält, die die Antriebsquelle der Einspritzeinheit (300) und den Übertragungsmechanismus der Einspritzeinheit (300) aufnimmt.

5. Spritzgießmaschine (10) nach einem der Ansprüche 1 bis 4, ferner umfassend:
eine Formschließ-/klemmeinheit (100), die eine stationäre Platte (110), an der eine stationäre Form (810) angebracht ist, eine bewegliche Platte (120), an der eine bewegliche Form (820) angebracht ist, eine Antriebsquelle, die bewirkt, dass sich die bewegliche Platte (120) vorwärts oder rückwärts bewegt, und einen Übertragungsmechanismus, der eine Antriebskraft der Antriebsquelle auf die bewegliche Platte (120) überträgt, enthält,
wobei die Abdeckung (500) eine Formschließeinheitsabdeckung enthält, die die Antriebsquelle der Formschließeinheit (100) und den Übertragungsmechanismus der Formschließeinheit (100) aufnimmt.

## Revendications

1. Une machine de moulage par injection (10) comprenant :
un capot (500) qui entoure une source de génération de bruit de la machine de moulage par injection (10) ; et
une partie insonorisée (600) qui réduit un bruit qui se propage vers un extérieur du capot (500),
dans laquelle la partie insonorisée (600) comprend une partie poreuse (620) qui atténue une onde sonore qui se propage depuis la source de génération de bruit, entre la source de génération de bruit et le capot (500), **caractérisée en ce que**
la partie insonorisée (600) comprend une partie de nervure (610) qui renforce le capot (500) afin d'éliminer une vibration du capot (500), et **en ce que**
la partie insonorisée (600) comprend en outre une partie de capot de protection (630) qui protège la partie poreuse (620) depuis un côté opposé au capot (500).

2. La machine de moulage par injection (10) selon la revendication 1, dans laquelle la partie insonorisée (600) comprend une pluralité de parties de nervures (610) formées sur une surface de paroi interne (502a) du capot (500) et qui renforcent le capot (500) afin d'éliminer une vibration du capot (500), une partie poreuse (620) qui est disposée entre la pluralité de parties de nervures (610) et atténue une onde sonore qui se propage depuis la source de génération de bruit, et une partie de capot de protection (630) qui est prévue entre les parties de nervures (610) et protège la partie poreuse (620) depuis un côté opposé au capot (500).

3. La machine de moulage par injection (10) selon la revendication 1 ou 2,
dans laquelle le capot (500) comprend un capot de source de génération (501) qui entoure la source de génération de bruit et un capot de logement (502) qui contient le capot de source de génération (501), et
dans laquelle la partie insonorisée (600) réduit un bruit qui se propage vers un extérieur du capot de logement (502).

4. La machine de moulage par injection (10) selon l'une quelconque des revendications 1 à 3, comprenant en outre :
une unité d'injection (300) comprenant un cylindre (310) qui chauffe un matériau de moulage, une vis (330) qui est disposée à l'intérieur du cylindre (310) de façon à pouvoir tourner et se déplacer vers l'avant ou l'arrière, une source d'entraînement qui entraîne la vis (330), et un mécanisme de transmission qui transmet une force d'entraînement de la source d'entraînement à la vis (330),
dans laquelle le capot (500) comprend un capot d'unité d'injection (502) qui contient la source d'entraînement de l'unité d'injection (300) et le mécanisme de transmission de l'unité d'injection (300).

5. La machine de moulage par injection (10) selon l'une quelconque des revendications 1 à 4, comprenant en outre :
une unité de serrage de moule (100) comprenant un plateau stationnaire (110) auquel un moule stationnaire (810) est relié, un plateau mobile (120) auquel un moule mobile (820) est relié, une source d'entraînement qui permet au plateau mobile (120) de se déplacer vers l'avant ou l'arrière, et un mécanisme de transmission qui transmet une force d'entraînement de la source d'entraînement au plateau mobile (120),
dans laquelle le capot (500) comprend un capot d'unité de serrage de moule qui contient la source d'entraînement de l'unité de serrage de moule (100) et le mécanisme de transmission de l'unité de serrage de moule (100).
